Europäisches Patentamt

European Patent Office

Office européen des brevets

(19)

(11) EP 1 387 536 A2

(12) **EUROPEAN PATENT APPLICATION**

(43) Date of publication:
04.02.2004 Bulletin 2004/06

(51) Int Cl.⁷: $H04L\ 12/56$

(21) Application number: 03016644.1

(22) Date of filing: 31.07.2003

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **02.08.2002 US 211619**<br><br>(71) Applicant: **ALCATEL**<br>**75008 Paris (FR)** | (72) Inventor: **Kamakshi, Sridhar**<br>**75093 Plano, Texas (US)**<br><br>(74) Representative:<br>**Dreiss, Fuhlendorf, Steimle & Becker**<br>**Patentanwälte**<br>**Postfach 10 37 62**<br>**70032 Stuttgart (DE)** |

(54) **System and method for increasing fairness in packet ring networks**

(57) Method and system for ensuring fairness in packet ring networks are described. In one embodiment, at each node, the traffic rate of incoming packets of a particular traffic class is measured and compared with a threshold the identity of which depends on the location of a destination node relative to the current node. For each such incoming packet, if the threshold is exceeded, the packet is marked as "non-conforming" before being sent into the network. Upon receipt of a congestion notification signal from a congested link, all packets in the network marked as non-conforming and destined for or beyond the congested node are dropped until congestion eases. As a consequence of the fairness mechanism, congestion control with maximum bandwidth utilization is also realized.

*FIG. 1*

EP 1 387 536 A2

**Description**

BACKGROUND OF THE INVENTION

Technical Field of the Invention

The present invention generally relates to packet ring networks, such as resilient packet ring ("RPR"), Gigabit Ethernet networks, and wavelength division multiplex ("WDM") packet ring networks. More particularly, and not by way of any limitation, the present invention is directed to increasing fairness in such networks.

Description of Related Art

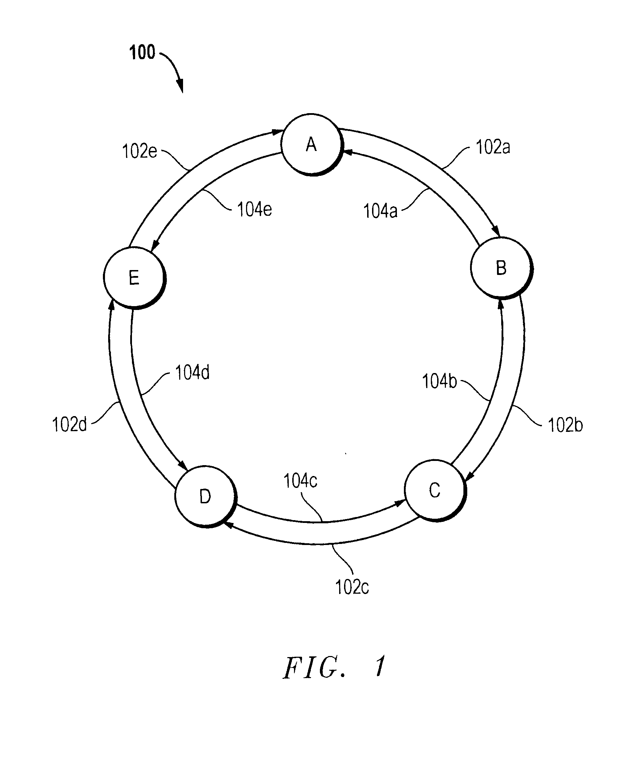

Packet ring networks, such as RPR, Gigabit Ethernet networks, and WDM variants thereof, are designed primarily for implementing Metropolitan Area Networks ("MANs") . FIG. 1 is an example of a packet ring network 100 consisting of five nodes, respectively designated A-E, connected in a ring. Each node is connected to adjacent nodes by at least one link in each of a clockwise and a counter-clockwise direction. In particular, links 102a-102e comprise the clockwise ring and links 104a-104e comprise the counter-clockwise ring. The problem of lack of fairness in a communications network is one that is unique to ring architecture. This is due to the fact that in a ring, traffic from one node to another can travel only in one direction and must pass through specific intermediate nodes to reach its destination. Lack of fairness results when one or more upstream nodes "starve" traffic of the same class from downstream nodes. Nodes that first suffer losses (downstream nodes) will further reduce their rates at the TCP source, leaving those with already better access advantage (upstream nodes) at an even greater advantage, thus exacerbating the problem for the downstream nodes.

One solution to the lack of fairness problem is to utilize a "credits" mechanism. Use of credits ensures an equal share of bandwidth, or a share proportional to allocation, in slotted WDM rings. A log is maintained of the number of packets sent at each node so that those going ahead of others are, at some point, throttled to reduce the difference. Credits are allocated to the node and are generated according to rates allocated at the time of service provisioning. Since there is no call admission or allocated bandwidth for Best Effort ("BE") traffic, this mechanism cannot be applied to BE traffic in packet ring networks. Also, this mechanism does not ensure fairness over the short term, but rather over a longer term and, in particular, the aggregates of long term transmitted traffic.

Another solution is referred to as "per destination queuing" or "virtual output queuing". At each node, a queue is provided for each destination. Traffic intended for a specific destination goes to the specific queue, at which point a fairness algorithm can be implemented. However, per destination queuing does not scale well with the number of nodes, because each node must maintain a queue for each destination. This makes it a particularly poor choice for RPR, which can support up to 256 nodes.

Another solution, referred to as the "signaling" approach, permits all traffic from all nodes into the network. When a downstream node wants to send traffic and does not have available bandwidth, it signals to the upstream nodes to throttle its traffic. Signaling acts to relieve congestion as a result of unfairness; however, it does not help to prevent unfairness from occurring.

Yet another solution, referred to as "Random Early Detection" ("RED"), and its variants, uses an implicit notification of congestion by means of packet dropping. All of the variants of RED address congestion avoidance and fairness of one or more flows arriving at a single node. Neither fairness in ring networks nor fairness with respect to multiple nodes is addressed by any known variant of RED.

SUMMARY OF THE INVENTION

Accordingly, the present invention advantageously provides a method and system for ensuring fairness in packet ring networks. In one embodiment, at each node, the traffic rate of incoming packets of a particular traffic class is measured and compared with a threshold the identity of which depends on the location of a destination node relative to the current node. For each such incoming packet, if the threshold is exceeded, the packet is marked as "non-conforming" before being sent into the network. Upon receipt of a congestion notification signal from a congested link via the counter-rotating ring, all packets in the network marked as non-conforming are dropped until congestion eases. As a consequence of the fairness mechanism, congestion control with maximum bandwidth utilization is also realized.

BRIEF DESCRIPTION OF THE DRAWINGS

A more complete understanding of the present invention may be had by reference to the following Detailed Description when taken in conjunction with the accompanying drawings wherein:

FIG. 1 depicts an packet ring network, specifically, an RPR network, in which features of one embodiment of the present invention may be implemented;

FIG. 2 depicts a node of the RPR network of FIG. 1 embodying features of one embodiment of the present invention; and

FIG. 3 depicts a flowchart of one embodiment of a method of increasing fairness in an RPR network such as the network depicted in FIG. 1.

**DETAILED DESCRIPTION OF THE DRAWINGS**

In the drawings, like or similar elements are designated with identical reference numerals throughout the several views thereof, and the various elements depicted are not necessarily drawn to scale.

Referring to FIG. 1, depicted therein is an exemplary RPR network 100 in which the teachings of the present invention may be advantageously practiced. As illustrated in FIG. 1, the network 100 comprises five nodes A-E connected in a single ring (comprising links 102a-102e) in which traffic is carried in a clockwise direction. It should be recognized that, although the network 100 comprises five nodes A-E, in general, there can be more or fewer nodes on the network 100. Moreover, the principles of the invention described herein will be applicable to the counter-clockwise ring, as well as to each of multiple wavelengths on a single ring. Furthermore, the principles of the invention described herein will be applicable to all packet ring networks, such as Gigabit Ethernet rings and WDM variations thereof.

Consideration of the relative spatial location of nodes in packet marking is a key feature of and unique to one embodiment of the invention. A "non-conformance" or "NC" bit of packets of a certain traffic class (e. g., BE) entering a node are set to one if they exceed a certain threshold. Each node is allowed to send traffic comprising some predefined fraction of the available bandwidth on a link as "conforming" traffic. Traffic over and above this fraction is "non-conforming." This predetermined fraction is referred to as "allotted bandwidth", and the limit on the allotted bandwidth is referred to as the "threshold." The threshold depends on the identity of the source and destination nodes, in addition to the usual variables, such as available bandwidth. As long as packets from a source node do not exceed the threshold for the destination node, the NC bit of each such packet is set to zero and the packet is sent into the network. The NC bit of each packet that exceeds the threshold for the destination node and thus comprises excess traffic beyond the allotted bandwidth is set to one. Packets that have NC=1 are also sent into the network; such packets are not dropped unless there is congestion on a link, as indicated by a congestion notification signal received on the counter-rotating ring. Packets that have NC=0 are never dropped, even in response to a congestion notification signal received on the counter-rotating ring.

For purposes of example, it will be assumed that the network 100 supports three classes of traffic, including Gold ("G"), Silver ("S"), and Best Effort ("BE"), although it will be recognized that principles of the embodiments described herein may be applied to networks including more or fewer classes of traffic. It will be further assumed that the fairness mechanism is applied to BE traffic only. Typically, G and S traffic are not admitted into the network unless sufficient bandwidth is available, although it will be recognized that the fairness mechanism is applicable to all classes of traffic, including G and S.

It will be noted that, in one embodiment, only ingress traffic is examined for marking; transit traffic is not examined for marking, since presumably it was examined at the ingress node.

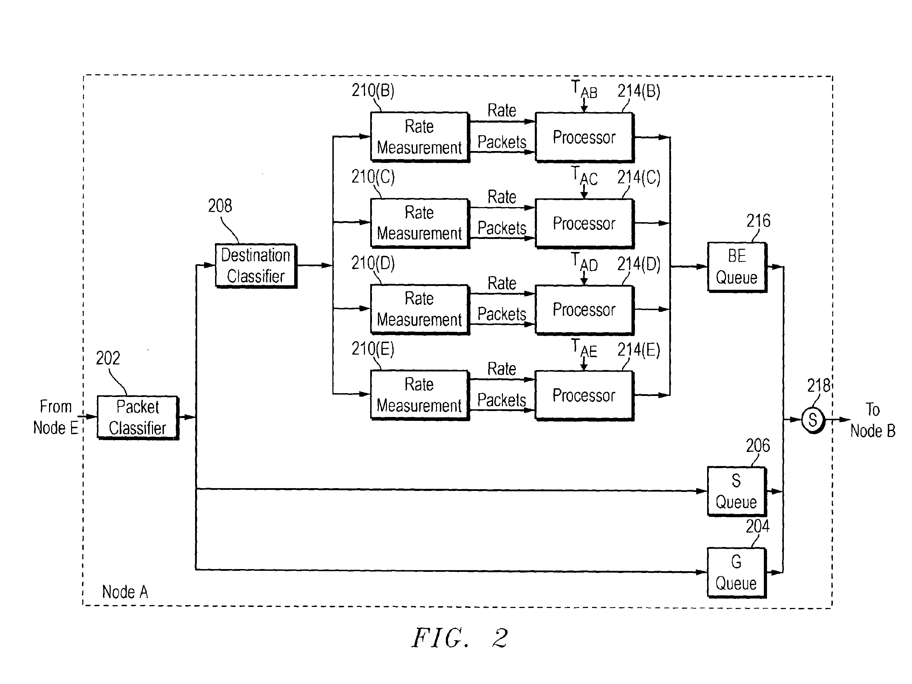

FIG. 2 is a block diagram of the node A of the network 100. It will be recognized that each of the remaining nodes B-E of the network 100 incorporate those features and functions described hereinbelow with reference to node A and hence will not be separately described. As illustrated in FIG. 2, at node A, traffic from node E (FIG. 1) on the link 102e enters a packet classifier 202, which routes each packet according to the class thereof. G traffic and S traffic are respectively routed by the packet classifier 202 to a G queue 204 and an S queue 206. BE traffic is routed to a destination classifier 208, which routes BE traffic flows to one of N-1 traffic rate measuring functions (where N is the number of nodes in the network, in this case, five) 210(B)-210(E) depending on the destination of the flow. In particular, traffic destined for node B (FIG. 1) is sent to the function 210(B); traffic destined for node C (FIG. 1) is sent to the function 210(C); traffic destined for node D (FIG. 1) is sent to the function 210(D); and traffic destined for node E (FIG. 1) is sent to the function 210(E). In one embodiment, the each of the traffic rate measuring functions 210(B)-210(E) may comprise a token bucket filter. In another embodiment, each of the traffic rate measuring functions 210(B)-210(E) may be implemented using a combination of a timer and a counter for counting packets during a predetermined time interval (as indicated by the timer) to measure the incoming rate of aggregated flows destined for the destination node to which the counter corresponds.

Once the traffic rate of the aggregate flow destined for node B has been determined, it is compared by a processor 210(B) to a predetermined threshold $T_{AB}$ (which is determined by the processor 210(B)) corresponding to the ingress node A and the destination node B. Similarly, processors 210(C)-210(E) each compares the traffic rate of the aggregate flow destined for nodes C-E, respectively, to a respective threshold $T_{AC}$, $T_{AD}$, and $T_{AE}$ (each of which are respectively determined by processors 210(C), 210(D), and 210(E)). At each processor 210(B)-210(E), if the traffic rate of the respective aggregate flow exceeds the respective threshold $T_{AB}$, $T_{AC}$, $T_{AD}$, and $T_{AE}$, the NC bit of each packet of that flow is set to one; otherwise, the NC bit of each packet of that flow remains zero.

At this point, the packets from all of the processors 214(B)-214(E) are forwarded to a BE queue 216. Packets are drained from the queues 204, 206, 216, in a conventional fashion based on parameters specifying how many packets of each class can be serviced by a scheduler 218 at each service rotation, and sent out on the link 102(a) toward the node B.

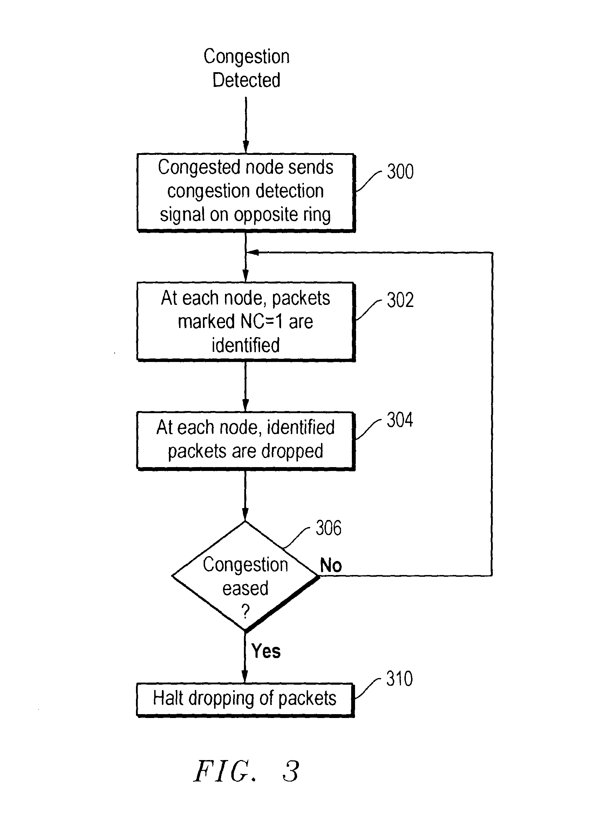

FIG. 3 is a flowchart illustrating how fairness is realized in accordance with one embodiment of the present invention. In step 300, in response to detection of congestion on a link, the congested node will send a congestion notification signal via the counter-rotating ring to all of the nodes in the network. This signal will have a very simple structure, indicating the identity of the congested node and link. In step 302, each of the upstream nodes identifies from the congestion notification signal which link is congested and examines each packet destined for the congested node. In step 304, packets destined for or beyond the congested node and marked non-conforming (NC=1) are dropped. In step 306, a determination is made whether congestion has eased. It will be recognized that the manner in which this determination is made will be implementation-dependent. In one implementation, the congested node will continue periodically to send a congestion notification signal on the counter-rotating ring until congestion eases. Upon the passage of a predetermined time period without receipt of a congestion notification signal, it will be assumed that congestion has eased. If in step 306 it is determined that congestion has not eased, execution returns to step 302 and non-conforming packets destined for or beyond the congested node continue to be identified (step 302) and dropped (step 304) by the upstream nodes; otherwise, execution proceeds to step 310, in which the dropping of non-conforming packets is halted.

Thus, if the process described with reference to FIG. 3 does not result in the relief of congestion over some period of time, the congested node will once again send a congestion notification signal. At this point, each node may lower its respective thresholds by some fixed amount. Each threshold may be lowered in specific increments, thus effectively resulting in an increasingly greater number of packets being marked NC=1, until congestion eases. Once congestion eases, each threshold may be increased in fixed increments until it is returned to its original value.

In view of the foregoing, so long as a congestion indication is not received from any of the nodes in a network, such as the network 100, all of the packets in the network, whether conforming (NC=0) or non-conforming (NC-1), will proceed to their intended destination nodes. If a downstream node (e.g., node C) wants to admit traffic destined for another node (e.g., node E) in the network and there is no available bandwidth, the downstream node C will still admit the traffic into the network. As described above with reference to FIG. 2, the packets comprising this incoming traffic will be marked NC=0 so long as the traffic rate thereof is less than a threshold for traffic from the current node to the intended destination (e.g., $T_{CE}$). Since there was no available bandwidth, packets from other nodes with NC=1 will be dropped, as described above with reference to FIG. 3.

One consequence of the embodiments described herein is that it also provides a way for controlling congestion due to excess traffic or a link failure. In the event of congestion, the goal is to relieve the congestion without having to drop all of the traffic, and thus maximize bandwidth utilization in the ring. Accordingly, there is no need to preemptively drop packets to prevent or avoid congestion. A signal similar to the congestion notification signal can be sent in the event of link failure, in which case the node adjacent the failed link will send a link failure notification signal to upstream nodes, in response to which the upstream nodes drop packets with NC=1.

During light network load, all traffic is let into the network. During heavily network load, or congestion, traffic that is non-conforming (NC=1) and destined for or beyond the congested node is dropped by any node that has such a packet in its buffer.

Fairness is achieved because at a given node, the threshold for marking packets destined for each of the other N-1 nodes is different. Thus, different nodes can available themselves of different shares of the available bandwidth. Note that there is never any exclusive reservation of bandwidth for any node. Maximum bandwidth utilization is achieved because even though packets are marked when they exceed their share of allotted bandwidth, they are not dropped unless congestion occurs, as indicated by a congestion notification signal. Thus, traffic from a node is allowed to make use of the bandwidth not used by other nodes. Congestion control is realized because when a congestion notification signal is received, any node that sees a packet marked with NC=1 and intended for the congested link drops the packet. A similar mechanism can be used in the event of a link failure to relieve congestion or excess traffic.

The threshold for a given destination is a function of the identity of the source node, the identity of the destination node, the available bandwidth on each link. In a ring with N nodes, there will be N-1 different thresholds at each node, corresponding to the N-1 different destinations accessible from the node.

The details of threshold computation are implementation-specific and can be done simply. The threshold is calculated at each node and is determined dynamically, in response to network load; e.g., each time a Gold user is added. Gold user bandwidth usage for each link is known by all nodes simply by looking at the bandwidth table thereof. An example of how thresholds might be determined will now be described. It will be recognized that the available bandwidth ("BW") for incoming BE traffic in a network, such as the network 100 (FIG. 1), at a node, such as the node A of the network 100, is equal to the total bandwidth ("TB") of the network less Gold bandwidth usage ("GB").

Of the Available Bandwidth BW on the clockwise link adjacent to node A, it would be pragmatic to allot less bandwidth to traffic destined for a node located a greater distance from the source node A (e.g., node E) within the network than to traffic destined for a node located closer to the source node A (e.g., node B). For ease of calculation, it will be assumed that the bandwidth allotted to incoming traffic at node A destined for node E will be some value "p". It will be further assumed that the bandwidth allotted to incoming traffic at node A destined for node D will be two times that allotted to incoming traffic at node A destined for node E, or "2p". In like fashion, it will be assumed that the bandwidth allotted to incoming traffic at node A destined for nodes C and B, respectively, will be "3p" and "4p".

The Available Bandwidth BW for incoming BE traffic at node A will be equal to the sum of the bandwidth allotted to traffic destined for each of the other nodes. Therefore:

$$BW = p + 2p + 3p + 4p = 10p$$

Assuming for ease of computation that BW is known to be 10GB, then p will be equal to 1 Gigabit/second ("GB") and the thresholds for incoming BE traffic at node A will be:

$$T_{AB}=4p=4GB$$

$$T_{AC}=3p=3GB$$

$$T_{AD}=2p=2GB$$

$$T_{AE}=p=1GB$$

It will be recognized that thresholds for BE traffic entering each of the remaining nodes (e.g., nodes B-E) may be calculated in a similar fashion. It should be noted that the foregoing example of threshold calculation is merely that, and that many other methods of setting the requisite thresholds may be employed as desired.

In accordance with features of one embodiment, lack of fairness is solved by permitting a downstream node to be able to send some amount of traffic no matter how heavily loaded or congested the links are. To relieve congestion, only a certain proportion of traffic is dropped at each node, instead of dropping all of the traffic at, for example, the farthest node or the nearest node. The invention scales well with the number of nodes, since there is no need for per-destination queuing. Even intermediate nodes can drop traffic sent from previous nodes in an attempt to minimize excess traffic going to a specific destination. Thus, the invention reacts faster to congestion than signaling.

The embodiments described herein require minimal signaling and minimal signaling complexity, since there is no need to advertise rates in signaling message. No synchronization between nodes is required to maintain fairness, congestion control, and maximum bandwidth utilization. Accordingly, the method is comprehensive.

Based upon the foregoing Detailed Description, it should be readily apparent that the present invention advantageously provides an innovative and efficient solution for eliminating lack of fairness in an RPR network or any other packet ring network.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

## Claims

1. A method of increasing fairness in a packet ring network comprising a plurality of nodes and a first ring comprising a plurality of links for carrying information between the nodes, the method comprising steps of:

    at each of the nodes:

        measuring a traffic rate of incoming traffic destined for a second node;
        comparing the measured traffic rate of the incoming traffic destined for the second node to a predetermined threshold corresponding to the second node;
        if the measured traffic rate exceeds the predetermined threshold for the second node, marking packets comprising the incoming traffic as non-conforming;
        if the measured traffic rate of the incoming traffic does not exceed the predetermined threshold for the second node, marking packets comprising the incoming traffic as conforming; and
        sending all marked packets into the network.

2. The method of claim 1 further comprising, responsive to detection of congestion at one of the nodes, dropping all packets in the network marked as non-conforming and destined for or beyond the congested node.

3. The method of claim 1 further comprising, at each of the nodes, responsive to detection of congestion at one of the nodes, dropping all packets comprising incoming traffic destined for or beyond the congested node for which the traffic rate thereof exceeds the predetermined threshold at the node corresponding to the congested node.

4. The method of claim 1 wherein the network further comprises a second ring including a plurality of links for carrying information between the nodes, the method further comprising, responsive to occurrence of congestion at a node, the congested node sending a congestion notification signal on the second ring.

5. The method of claim 4 further comprising, responsive to receipt by a node of a congestion notification signal, the node dropping all packets at the node marked as non-conforming and destined for or beyond the congested node.

6. The method of claim 4 further comprising, at each of the nodes, responsive to receipt by the node of a congestion detection signal, dropping all packets comprising incoming traffic destined for or beyond the congested node for which the traffic rate thereof exceeds the predetermined threshold at the node corresponding to the congested node.

7. A packet ring network comprising:

   a plurality of nodes;
   a first ring comprising a plurality of links for carrying information between the nodes;

   wherein each of the nodes comprises:

   means for marking packets comprising incoming traffic destined for a second node as non-conforming if a traffic rate thereof exceeds a predetermined threshold corresponding to the second node; and
   means for marking packets comprising incoming traffic destined for a second node as conforming if a traffic rate thereof does not exceed the predetermined threshold for the second node; and

   wherein all marked packets are sent into the network unless one or more of the nodes is congested.

8. The network of claim 21 further comprising a second ring including a plurality of links for carrying information between the nodes, and wherein responsive to occurrence of congestion at a node, the congested node sends a congestion notification signal on the second ring.

9. The network of claim 22 wherein responsive to receipt by a node of a congestion notification signal, the node drops all packets at the node marked as non-conforming and destined for or beyond the congested node.

10. The network of claim 22 wherein at each of the nodes, responsive to receipt by the node of a congestion detection signal, the node drops all packets comprising incoming traffic destined for or beyond the congested node for which the traffic rate thereof exceeds the predetermined threshold at the node corresponding to the congested node.

EP 1 387 536 A2

FIG. 1

7

FIG. 2

Congestion
Detected

| |
|---|
| Congested node sends congestion detection signal on opposite ring |

300

| |
|---|
| At each node, packets marked NC=1 are identified |

302

| |
|---|
| At each node, identified packets are dropped |

304

306

Congestion
eased
?

**No**

**Yes**

| |
|---|
| Halt dropping of packets |

310

*FIG. 3*